# EUROPÄISCHE PATENTSCHRIFT

(11) **EP 4 335 328 B1**
(45) Veröffentlichungstag und Bekanntmachung des Hinweises auf die Patenterteilung: **29.10.2025**
(21) Anmeldenummer: 22194188.3
(22) Anmeldetag: 06.09.2022
(51) Int. Cl.: A47J 19/06, A47J 43/046, A47J 43/08, A47J 19/02

(54) **ENTSAFTERMODUL FÜR EIN ZUBEREITUNGSGEFÄSS UND EIN KÜCHENGERÄT**
JUICER MODULE FOR A PREPARATION VESSEL AND A KITCHEN APPLIANCE
MODULE EXTRACTEUR DE JUS POUR RÉCIPIENT DE PRÉPARATION ET APPAREIL DE CUISINE

(43) Veröffentlichungstag der Anmeldung: 13.03.2024
(60) Teilanmeldung: 24166996.9
(73) Patentinhaber: Vorwerk & Co. Interholding GmbH, 42270 Wuppertal (DE)
(72) Erfinder: Buschkühle, Marvin, 40223 Düsseldorf (DE); Sickert, Michael, 58256 Ennepetal (DE); Heynen, Andreas, 42477 Radevormwald (DE); Ehring, Ingo, 46238 Bottrop (DE)
(74) Vertreter: Dr. Solf & Zapf Patent- und Rechtsanwalts PartG mbB

(56) Entgegenhaltungen:
- WO-A1-2015/088176
- CN-A- 111 345 707
- DE-U1- 202021 105 191
- KR-Y1- 200 368 487
- US-A1- 2022 240 708

## Beschreibung

Die Erfindung betrifft ein Entsaftermodul zum Zusammenwirken mit einem zumindest einen rotierbaren Werkzeughalter aufweisenden Zubereitungsgefäß. Das Zubereitungsgefäß ist beispielsweise Teil eines Küchengeräts zur Zubereitung von Speisen. Das Entsaftermodul weist mindestens eine Antriebsschnittstelle und mindestens ein Entsafterwerkzeug auf. Das Entsafterwerkzeug ist mit der Antriebsschnittstelle verbindbar bzw. verbunden, so dass mit einer Rotation der Antriebsschnittstelle eine Rotation zumindest eines Teils des Entsafterwerkzeugs bewirkbar ist.

Gesunde Ernährung ist für viele Menschen ein zentraler Bestandteil im Tagesablauf. Zur Herstellung von Säften sind im Stand der Technik eine Vielzahl von Hilfsmitteln bekannt, mit denen Lebensmittel, insbesondere Obst und Gemüse, entsaftet werden können. Dazu werden üblicherweise handbetriebene Werkzeuge, wie z. B. Entsaftungskegel für Zitrusfrüchte oder manuelle Reiben, z. B. für Äpfel oder Gemüse, verwendet. Ferner sind eine Vielzahl elektrisch betriebener Entsaftungsgeräte bekannt, die das zu entsaftende Lebensmittel zerkleinern oder zerquetschen und die gewonnene Flüssigkeit im Wesentlichen von den festen Bestandteilen des Lebensmittels trennen.

Die aus dem Stand der Technik bekannten Hilfsmittel oder Geräte weisen allerdings den Nachteil auf, dass entweder ein enormer Kraft- und Zeitaufwand seitens des Verwenders aufgebracht werden muss, oder - im Fall von elektrischen Zentrifugalentsaftern - stets ein nur zum Zweck des Entsaftens verwendbares Gerät, beispielsweise wie in KR 2006/0101848 A offenbart, gelagert werden muss.

Aus DE 20 2021 105 191 U1 ist ein Saftpressenergänzungsset für eine Küchenmaschine mit einem Mixtopf bekannt. Durch Druck auf die auszupressende Zitrusfrucht, die auf einem Auspresskegel angeordnet ist, wird die Zitrusfrucht entsaftet. Der so erzeugte Saft läuft durch ein Sieb, um von dem Fruchtfleisch getrennt zu werden.

CN 111 345 707 A und US 2022/240708 A1 offenbaren einen Entsafter mit einer Zerkleinerungseinheit und einer Trenneinheit. Das zu entsaftende Lebensmittel wird in der Zerkleinerungseinheit zerkleinert. Damit die Farbe und Inhaltsstoffe des Lebensmittels in dem Saft beibehalten werden, schlägt CN 111 345 707 A ferner vor, die Zerkleinerung unter Vakuum durchzuführen. Das Lebensmittelsaft-Lebensmittelfleisch-Gemisch wird anschließend in beiden Fällen in einen Separator geleitet. Die jeweils offenbarten Entsafteraufsätze sind mit einer für den Entsafteraufsatz spezifischen Gerätebasis verbindbar.

EP 3 895 584 A1 offenbart ein Entsaftergefäß für einen Entsafter mit einem Entsafterwerkzeug. WO 2010/007290 A2 offenbart einen Entsafter mit einer Entsafterbasis und einem auf der Entsafterbasis anordenbaren Entsaftergefäß mit Entsafterwerkzeug. US 2017/0105565 A1 offenbart eine Entsaftervorrichtung, die von zwei separaten Motoren antreibbar ist. Der Saft wird mittels einer Sammelfläche gesammelt und seitlich nach außen geleitet. US 2014/0130685 A1 offenbart ein Entsaftergefäß zum Anordnen auf einer Entsafterbasis mit einem Antrieb. DE 10 2019 212 732 A1 offenbart eine Getriebeeinheit für eine Küchenmachine.

Der vorliegenden Erfindung liegt daher die Aufgabe zu Grunde, ein Hilfsmittel zum Entsaften von Lebensmitteln anzugeben, bei dessen Handhabung der Kraftaufwand für den Verwender reduziert ist und gleichzeitig auf ein zusätzliches Gerät verzichtet werden kann.

Die Aufgabe wird bei einem gattungsgemäßen Entsaftermodul durch den Merkmalsinhalt des kennzeichnenden Teils des Anspruchs 1 gelöst.

In einer Vielzahl von Haushalten sind bereits Küchengeräte im Einsatz, die ein Zubereitungsgefäß mit mindestens einem rotierbaren Werkzeughalter aufweisen. Beispielsweise handelt es sich dabei um Küchengeräte, die zum Zubereiten von Speisen ausgebildet sind. Das Zubereitungsgefäß weist ein Volumen auf, in das die zubereiteten Speisen eingebracht werden. Am Boden des Zubereitungsgefäßes ist üblicherweise der rotierbare Werkzeughalter bzw. das an dem rotierbaren Werkzeughalter befestigte Werkzeug angeordnet. Der Werkzeughalter ist im in das Küchengerät eingesetzten Zustand des Zubereitungsgefäßes von einem Motor des Küchengeräts, insbesondere mit variablen Drehzahlen, rotierend antreibbar.

Der Werkzeughalter weist beispielsweise eine das Zubereitungsgefäß durchtretende Welle auf. Insbesondere ist die Welle außerhalb des Zubereitungsgefäßes zumindest mittelbar, vorzugsweise formschlüssig, mit einem Motor eines Küchengeräts koppelbar. Es ist vorteilhaft vorgesehen, dass ein Werkzeug fest oder lösbar mit dem Werkzeughalter bzw. der Welle verbunden ist. Alternativ dazu ist auch vorgesehen, dass der Werkzeughalter rotierbar magnetisch mit einem Motor koppelbar ist.

Das Zubereitungsgefäß weist beispielsweise ein an dem Werkzeughalter befestigtes Werkzeug zum Rühren und/oder Zerkleinern von Lebensmitteln auf. Ferner ist insbesondere vorgesehen, dass das Zubereitungsgefäß mindestens eine, insbesondere elektrische, Heizeinrichtung aufweist, mit der vorzugsweise in das Zubereitungsgefäß einbringbare Lebensmittel aufheizbar sind. Das Zubereitungsgefäß weist für die Heizeinrichtung z. B. mindestens eine elektrische Schnittstelle zum Küchengerät auf.

Das Entsaftermodul ist zum Zusammenwirken mit einem Zubereitungsgefäß ausgebildet, indem das Entsaftermodul auf ein Zubereitungsgefäß insbesondere auf einen oberen Rand des Zubereitungsgefäßes, aufsetzbar ist. Es ist auch vorgesehen, dass das Entsaftermodul zumindest teilweise, insbesondere vollständig, in das Zubereitungsgefäß, vorzugsweise in das für Lebensmittel vorgesehene Volumen, einsetzbar ist.

Das Entsaftermodul weist mindestens eine Antriebsschnittstelle und mindestens ein Entsafterwerkzeug auf. Die Antriebsschnittstelle ist derart eingerichtet und ausgebildet, dass sie zum Übertragen eines Drehmoments zumindest mittelbar mit dem Werkzeughalter und/oder dem an dem Werkzeughalter angeordneten Werkzeug des Zubereitungsgefäßes koppelbar ist. Die Antriebsschnittstelle kann folglich mit dem in dem Zubereitungsgefäß vorhandenen rotierbaren Werkzeughalter zumindest mittelbar gekoppelt werden, so dass bei einer Rotation des Werkzeughalters auch die Antriebsschnittstelle rotiert. Es ist vorgesehen, dass die Antriebsschnittstelle zum Übertragen eines Drehmoments nur mit dem Werkzeughalter oder nur mit dem Werkzeug oder mit dem Werkzeug und dem Werkzeughalter zusammenwirkt.

Die Antriebsschnittstelle ist zumindest mit einem Teil des Entsafterwerkzeugs drehfest verbunden, so dass mit einer Rotation der Antriebsschnittstelle eine Relativbewegung zwischen Führungskörper und Siebeinheit bewirkbar ist. Die Antriebsschnittstelle weist beispielsweise mindestens eine Antriebswelle auf. Die Antriebswelle ist vorzugsweise mit dem Führungskörper oder der Siebeinheit koppelbar bzw. gekoppelt. Beispielsweise ist die Antriebsschnittstelle derart mit dem Entsafterwerkzeug verbunden, dass der Führungskörper rotierbar ist. Es ist alternativ dazu auch vorgesehen, dass die Antriebsschnittstelle derart mit dem Entsafterwerkzeug verbunden ist, dass die Siebeinheit rotierbar ist.

Die Antriebsschnittstelle, insbesondere die Antriebswelle, und/oder die Siebeinheit und/oder der Führungskörper sind beispielsweise aus einem Kunststoff oder einem Metall, insbesondere einem rostfreien Stahl, hergestellt.

Die Reinigung wird insbesondere dadurch vereinfacht, dass die Antriebsschnittstelle, insbesondere die Antriebswelle, der Führungskörper und/oder die Siebeinheit voneinander demontierbar sind, insbesondere werkzeugfrei demontierbar sind. Insbesondere ist zumindest der Führungskörper und/oder die Siebeinheit austauschbar montiert. Es ist auch vorgesehen, dass die Antriebsschnittstelle, insbesondere die Antriebswelle, und der Führungskörper nicht-demontierbar miteinander verbunden sind.

Vorzugsweise ist das Entsaftermodul für den Einsatz in Zubereitungsgefäßen von Küchengeräten vorgesehen, deren Motor mit einer Drehzahl im Bereich von weniger als 200 Umdrehungen pro Minute, insbesondere weniger als 150 Umdrehungen pro Minute betreibbar ist. Vorzugsweise ist der Motor des Küchengeräts dazu ausgebildet, ein Mindestdrehmoment von 12 Nm, insbesondere 15 Nm, besonders bevorzugt von 18 Nm, aufzubringen, beispielsweise bei einer Drehzahl von weniger als 200 Umdrehungen pro Minute, insbesondere weniger als 150 Umdrehungen pro Minute.

Die Erfindung weist gegenüber dem Stand der Technik den Vorteil auf, dass ein schonendes Entsaften von einer Vielzahl von Lebensmitteln ermöglicht ist. Durch das Aufbringen einer Presskraft zwischen Führungskörper und Siebeinheit wird eine gute Saftausbeute erzielt. Dadurch, dass zumindest ein Teil der Bauteile voneinander demontierbar ist, wird ein geringerer Reinigungsaufwand erreicht.

Gemäß einer ersten Ausgestaltung des Entsaftermoduls ist vorgesehen, dass der Führungskörper mit der Antriebsschnittstelle derart verbindbar bzw. verbunden ist, dass eine Rotation der Antriebsschnittstelle eine Rotation des Führungskörpers, insbesondere relativ zur Siebeinheit, bewirkt. Vorzugsweise ist die Siebeinheit drehfest angeordnet. Beispielsweise ist die Antriebsschnittstelle, insbesondere die Antriebswelle, formschlüssig mit dem Führungskörper verbindbar bzw. verbunden.

Beispielsweise weist der Führungskörper eine im Wesentlichen konvex gewölbte Außenkontur auf. Beispielsweise nimmt der Durchmesser des Führungskörpers ausgehend von einem im Montagezustand oberen Ende stetig bis zu einem maximalen Durchmesser zu. Der maximale Durchmesser liegt beispielsweise auf etwa 1/3 der Höhe des Führungskörpers. Insbesondere ist am maximalen Durchmesser des Führungskörpers die geringste Spaltbreite des Spaltes zwischen Führungskörper und Siebeinheit ausgebildet. Unterhalb des maximalen Durchmessers nimmt der Durchmesser des Führungskörpers vorteilhaft wieder ab, um vorteilhaft Pressreste von Lebensmitteln ausfördern zu können. Beispielsweise weist der Förderkörper eine Tropfen- oder Birnenform auf. Die Form des Förderkörpers entspricht vorzugsweise der Form eines in KR 2006/0101848 A in Fig. 4 oder Fig. 7 mit dem Bezugszeichen 20 offenbarten Förderkörpers.

Es ist auch vorgesehen, dass der Förderkörper im Wesentlichen die Form eines Kegels, eines Zylinders, einer Kugel oder eines Elipsoids aufweist.

Beispielsweise weist der Führungskörper an einer im Montagezustand unteren Stirnseite mindestens einen, vorzugsweise eine Mehrzahl an Fördervorsprüngen auf, um Pressreste zu einer Tresteröffnung im Gehäuse des Entsaftermoduls zu fördern.

Vorzugsweise ist vorgesehen, dass der Förderkörper mindestens eine Förderkontur, insbesondere auf seiner Außenkontur, aufweist. Die Förderkontur weist vorzugsweise helixförmig verlaufende Stege auf. Der Abstand der Stege nimmt, ausgehend von einem im Montagezustand oberen Ende des Führungskörpers, nach unten hin ab. Folglich reduziert sich die Gewindesteigung in Richtung des größeren Durchmessers des Führungskörpers. Dadurch können eingebrachte Lebensmittel durch die Stege in den Spalt, insbesondere den Ringspalt zwischen Siebeinheit und Führungskörper, nach unten gefördert werden und werden mit zunehmender Förderdistanz stärker komprimiert und folglich ausgepresst. Vorzugsweise ist der Führungskörper als Pressschnecke mit einem oder mehreren der vorstehend beschriebenen Merkmale ausgebildet.

Die Siebeinheit weist, zumindest auf dem Innenumfang, beispielsweise eine im Montagezustand nach unten zulaufende Kegelstumpfform auf. Besonders bevorzugt ist die Siebeinheit derart angeordnet, dass sich der Durchmesser der Siebeinheit mit zunehmendem Durchmesser des Führungskörpers verjüngt.

Besonders bevorzugt ist vorgesehen, dass die Siebeinheit zumindest auf dem Innenumfang eine Kegelstumpfform aufweist, und dass die Förderkontur eine derartige Außenkontur aufweist, dass sie einen gleichbleibenden radialen Abstand zur Siebeinheit aufweist. Die Förderkontur ist derart ausgebildet, dass die Förderkontur die Grundform des Förderkörpers - beispielsweise tropfen- oder birnenförmig - zu einer Form mit einer im Wesentlichen kegelstumpfförmigen - gedachten - Hüllkontur ergänzt. Auf diese Weise weist die Förderkontur im in die Siebeinheit eingebrachten Zustand des Förderkörpers radial einen im Wesentlichen gleichbleibenden Abstand zur Siebeinheit auf. Gleichzeitig variiert der Abstand der Grundform des Förderkörpers - z. B. Tropfen- oder Birnenform - zur Siebeinheit, insbesondere, um den sich verjüngenden Spalt für den Pressvorgang zu realisieren.

Gemäß einer weiteren Ausgestaltung des Entsaftermoduls ist vorgesehen, dass die Siebeinheit mindestens ein erstes Sieb mit ersten Sieböffnungen und mindestens ein zweites Sieb mit zweiten Sieböffnungen aufweist. Das erste Sieb ist in dem zweiten Sieb anordenbar. Besonders vorteilhaft ist vorgesehen, dass das erste Sieb und das zweite Sieb konisch ausgebildet sind. Vorzugsweise weisen das erste Sieb und das zweite Sieb eine Kegelstumpfform auf. Dadurch ergibt sich ein vorteilhaftes Zusammenwirken mit einem vorstehend beschriebenen Führungskörper zur Ausbildung eines sich verjüngenden Spalts zum Auspressen von Lebensmitteln.

Beispielsweise sind das erste Sieb und das zweite Sieb derart ausgebildet, dass sie in mindestens zwei unterschiedlichen Ausrichtungen ineinander anordenbar sind. Eine Überdeckung der ersten Sieböffnungen und der zweiten Sieböffnungen ist zumindest in den beiden unterschiedlichen Ausrichtungen voneinander verschieden, so dass die Größe der resultierenden Sieböffnungen und damit der Siebgrad der Siebeinheit, insbesondere in Abhängigkeit von dem auszupressenden Lebensmittel, einstellbar ist. Vorzugsweise sind die Sieböffnungen im ersten Sieb und im zweiten Sieb als im Wesentlichen horizontal angeordnete Siebschlitze ausgebildet. Z. B. durch eine Rotation des ersten Siebes relativ zum zweiten Sieb kann dann die Länge der resultierenden, horizontalen Siebschlitze eingestellt werden. Alternativ oder zusätzlich dazu ist vorgesehen, dass auch die Überdeckung der Siebschlitze durch unterschiedliche Eindringtiefen des ersten Siebes in das zweite Sieb einstellbar ist.

Beispielsweise weist das zweite Sieb im unteren Bereich mindestens eine Auflagestufe, vorzugsweise eine Mehrzahl von Auflagestufen mit unterschiedlichen Absatzhöhen auf. Das erste Sieb verfügt im unteren Bereich über Auflagetaschen, in die die Auflagestufen des zweiten Siebes eingreifen können. Durch diese definierten, verschiedenen Auflagen können zwei unterschiedliche Ausrichtungen mit vordefinierten Spaltmaßen für die horizontalen Siebschlitze eingestellt werden. Vorteilhaft können durch Rotation des ersten Siebes relativ zum zweiten Sieb die Paarungen der Auflagetaschen und Auflagestufen verändert werden, wodurch die Überdeckung der Siebschlitze des ersten Siebes und des zweiten Siebes einstellbar ist. Auf diese Weise können mit der Siebeinheit verschiedene Siebgrade realisiert werden, ohne dass zusätzliche Bauteile erforderlich sind.

Eine weitere Ausgestaltung des Entsaftermoduls sieht vor, dass mindestens ein Gehäuse vorhanden ist. Vorzugsweise sind in dem Gehäuse zumindest die Siebeinheit und der Führungskörper angeordnet. Das Gehäuse weist mindestens eine Deckelöffnung, mindestens einen Saftauslass und mindestens eine Tresteröffnung sowie einen Deckel auf. Der Deckel ist derart ausgebildet, dass die Deckelöffnung mit dem Deckel verschließbar ist. Um Axialkräfte des Entsafterwerkzeugs im Deckel aufnehmen zu können, ist insbesondere vorgesehen, dass zwischen Deckel und Gehäuse eine in Axialrichtung der Rotationsachse des Entsafterwerkzeugs formschlüssige Verbindung ausbildbar ist. Als besonders vorteilhaft hat sich herausgestellt, wenn ein Bajonettverschluss zwischen Gehäuse und Deckel ausgebildet ist.

Um das Entsaftermodul, insbesondere das Gehäuse, vorteilhaft am bzw. im Zubereitungsgefäß oder am Küchengerät zu fixieren, ist vorgesehen, dass das Entsaftermodul zum formschlüssigen Zusammenwirken mit dem Zubereitungsgefäß und/oder der Küchengerätebasis ausgebildet ist, insbesondere im montierten Zustand formschlüssig mit dem Zubereitungsgefäß oder der Küchengerätebasis zusammenwirkt. Beispielsweise weist das Entsaftermodul, insbesondere das Gehäuse und/oder ein Tresterbehälter, mindestens ein Fixiermittel oder eine Mehrzahl an Fixiermitteln auf, um das Entsaftermodul an einem Griff des Zubereitungsgefäßes und/oder einem Tragegriff der Küchengerätebasis zu fixieren. Das Fixiermittel oder die Fixiermittel ist/sind vorzugsweise dazu ausgebildet, formschlüssig mit einem Griff des Zubereitungsgefäßes und/oder einem Tragegriff der Küchengerätebasis zusammenzuwirken, insbesondere um ein Auswandern des Entsaftermoduls aus dem Zubereitungsgefäß während des Betriebes zu verhindern.

Es ist insbesondere vorgesehen, dass das Entsaftermodul, insbesondere das Gehäuse und/oder ein Tresterbehälter, zum formschlüssigen Hintergreifen einer Kontur am Zubereitungsgefäß, beispielsweise einem oberen Rand des Zubereitungsgefäßes, ausgebildet ist, vorteilhaft, um ein axiales Auswandern zu verhindern. Alternativ dazu ist vorzugsweise vorgesehen, dass das Entsaftermodul, insbesondere das Gehäuse und/oder ein Tresterbehälter, Fixiermittel aufweist, mit denen das Entsaftermodul, insbesondere das Gehäuse und/oder ein Tresterbehälter, kraftschlüssig gegen eine Innenwand des Zubereitungsgefäßes verspannbar ist.

Der Saftauslass ist vorzugsweise derart angeordnet, dass er sich seitlich aus dem Gehäuse heraus erstreckt. Der Saftauslass weist beispielsweise mindestens eine Saftklappe auf, um den Saftauslass zu verschließen. Zwischen Saftauslass und Saftklappe ist beispielsweise mindestens eine Dichtung angeordnet. Der Boden des Gehäuses verfügt vorzugsweise über ein Gefälle, das im Montagezustand am Zubereitungsgefäß den Saft in Richtung des Saftauslasses leitet.

Am Boden des Gehäuses ist beispielsweise mindestens eine Tresteröffnung angeordnet, durch die Pressreste aus dem Gehäuse ausgeleitet werden können, insbesondere in einen unterhalb des Gehäuses angeordneten Tresterbehälter. Die Tresteröffnung ist beispielsweise mittels eines Tresteröffnungsschiebers teilweise oder vollständig verschließbar bzw. teilweise oder vollständig öffenbar. Zwischen dem Tresteröffnungsschieber und dem Gehäuse befindet sich vorzugsweise eine Dichtung, um ungewolltes Austreten von Saft und Trester aus dem Gehäuse zu verhindern. Vorzugsweise ist der Tresteröffnungsschieber auf dem Tresterbehälter, insbesondere verschwenkbar oder translatorisch bewegbar, gelagert oder geführt.

Beispielsweise ist vorgesehen, dass sich der Führungskörper zur Rotation an dem Deckel abstützt, insbesondere ist der Führungskörper in dem Deckel rotierbar, z. B. mit einem Gleitlager, gelagert. Beispielsweise weist der Führungskörper einen Lagervorsprung auf, der in einen Lagerrücksprung am Deckel des Gehäuses eingreift.

Der Deckel verfügt vorzugsweise über mindestens einen Einfüllstutzen mit Einfülltrichter. Der Einfüllstutzen ist so platziert, dass zu entsaftende Lebensmittel zwischen den Führungskörper und die Siebeinheit einfüllbar sind. Durch eine Rotation des Führungskörpers werden zu entsaftende Lebensmittel in den sich verjüngenden Spalt zwischen Siebeinheit und Führungskörper gefördert und durch eine Presskraft entsaftet.

Insbesondere um die Sicherheit eines Benutzers während der Verwendung des Entsaftermoduls zu steigern, ist gemäß einer weiteren Ausgestaltung vorgesehen, dass der Deckel zum Zusammenwirken mit mindestens zwei Deckelhalterungen ausgebildet ist. Die Deckelhalterungen sind vorzugsweise jeweils in einem Seitenbereich des Gehäuses des Entsaftermoduls anordenbar. Vorzugsweise stützen sich die Deckelhalterungen im Montagezustand zumindest teilweise auf einer Oberseite des Deckels und auf einem Rand des Tresterbehälters ab. Die Deckelhalterungen sind beispielsweise gegenüberliegend zueinander am Gehäuse anordenbar. Die Deckelhalterungen sind zum Zusammenwirken mit Haltewalzen eines Küchengerätes ausgebildet. Die Haltewalzen dienen üblicherweise der Verriegelung eines Zubereitungsdeckels mit dem Zubereitungsgefäß. Im Zusammenwirken mit den Deckelhalterungen bieten die Deckelhalterungen den Haltewalzen einen definierten Widerstand, so dass das Küchengerät mittels der Haltewalzen erkennen kann, ob die Deckelhalterungen montiert sind.

Es ist vorgesehen, dass die Deckelhalterungen am Deckel nur montiert werden können, wenn der Deckel korrekt montiert, insbesondere mit dem Gehäuse verriegelt, ist. Dabei ist vorgesehen, dass das Küchengerät beispielsweise eine Fehlermeldung ausgibt und/oder der Betrieb des Entsaftermoduls mit dem Küchengerät nicht gestartet werden kann, wenn das Vorhandensein der Deckelhalterungen nicht erkannt wird.

Vorzugsweise weist das Entsaftermodul mindestens einen Tresterbehälter auf. Der Tresterbehälter ist beispielsweise unterhalb des Entsafterwerkzeugs, nämlich unterhalb des Führungskörpers und der Siebeinheit, angeordnet. Beispielsweise ist der Tresterbehälter unterhalb des Gehäuses anordenbar. Insbesondere ist das Gehäuse auf den Tresterbehälter aufsetzbar. Der Tresterbehälter ist beispielsweise derart ausgebildet, dass er zumindest teilweise, insbesondere vollständig, in das Zubereitungsgefäß, insbesondere in das für Lebensmittel vorgesehene Volumen des Zubereitungsgefäßes, einbringbar ist.

Vorteilhaft weist der Tresterbehälter mindestens zwei Griffstücke auf, die sich im montierten Zustand außerhalb des Zubereitungsgefäßes erstrecken. Die Griffstücke sind insbesondere gegenüberliegend zueinander angeordnet.

Insbesondere weist der Tresterbehälter eine derartige Form auf, dass er sich über einen Teil der Höhe des Zubereitungsgefäßes erstreckt, vorzugsweise etwa über die Hälfte der Höhe eines Zubereitungsinnenraums des Zubereitungsgefäßes. Der Tresterbehälter liegt vorzugsweise umfänglich über zumindest einen Teil seiner Höhe an einer Innenwand des Zubereitungsgefäßes an. Beispielsweise weist der Tresterbehälter mindestens einen Rücksprung auf, der mit mindestens einem Vorsprung an einer Innenwand des Zubereitungsgefäßes zusammenwirkt, um durch Formschluss eine Rotation des Tresterbehälters im Zubereitungsgefäß zu verhindern. Vorzugsweise weist der Tresterbehälter eine Mehrzahl von Rücksprüngen auf, die mit einer Mehrzahl von Vorsprüngen an der Innenwand des Zubereitungsgefäßes formschlüssig zusammenwirken. Der Tresterbehälter weist beispielsweise eine zentrale Durchführung auf, in der der Tresterbehälter von der Antriebsschnittstelle, insbesondere der Antriebswelle, durchtretbar ist.

Eine weitere Ausgestaltung des Entsaftermoduls sieht vor, dass mindestens ein separater Saftbehälter vorgesehen ist. Beispielsweise ist der Saftbehälter an dem Tresterbehälter montierbar, z. B. indem der Saftbehälter mit zwei Haken an dem Tresterbehälter eingehängt wird. Beispielsweise wird der Saftbehälter am Tresterbehälter oder am Gehäuse eingehängt oder eingerastet oder kraft- und/oder formschlüssig befestigt. Vorzugsweise ist vorgesehen, dass der Saftbehälter derart ausgebildet ist, dass er sich im Montagezustand am Tresterbehälter zumindest teilweise an einem Griff des Zubereitungsgefäßes abstützt. Der Saftbehälter ist vorzugsweise derart anordenbar, dass er sich unterhalb einer Saftöffnung im Gehäuse des Entsaftermoduls befindet.

Um vorteilhaft eine Verwendung mit Küchengeräten zu verbessern, bei denen die Drehzahl eines Motors nicht oder nur in engen Grenzen einstellbar ist, hat es sich gemäß einer weiteren Ausgestaltung als vorteilhaft herausgestellt, wenn mindestens eine Getriebeeinheit vorhanden ist. Die Getriebeeinheit weist mindestens ein Adapterelement zum zumindest mittelbaren Zusammenwirken mit dem Werkzeughalter des Zubereitungsgefäßes und mindestens eine Abtriebsschnittstelle auf. Die Getriebeeinheit ist dazu ausgebildet, eine hohe Drehzahl am Adapterelement auf eine geringere Drehzahl an der Abtriebsschnittstelle umzusetzen. Die Abtriebsschnittstelle weist beispielsweise mindestens eine Welle auf.

Die Getriebeeinheit weist beispielsweise ein Gehäuse auf, mit dem sie zumindest teilweise in das Zubereitungsgefäß einbringbar ist. Vorteilhaft ist die Getriebeeinheit vollständig in das Zubereitungsgefäß einbringbar, so dass sie beispielsweise im Zubereitungsgefäß zwischen dem Werkzeughalter und dem Tresterbehälter des Entsaftermoduls angeordnet ist. Vorzugsweise weist das Gehäuse der Getriebeeinheit am Außenumfang mindestens eine Ausnehmung auf, die formschlüssig mit Vorsprüngen in der Innenwand des Zubereitungsgefäßes zusammenwirken kann, um ein Verdrehen der Getriebeeinheit relativ zum Zubereitungsgefäß im Betrieb zu verhindern. Vorzugsweise weist das Gehäuse der Getriebeeinheit eine Mehrzahl an Ausnehmungen auf, die mit einer Mehrzahl an Vorsprüngen in der Innenwand des Zubereitungsgefäßes zusammenwirken können.

Das Adapterelement ist mittelbar oder unmittelbar mit dem Werkzeughalter des Zubereitungsgefäßes verbindbar. Wenn das Werkzeug im Zubereitungsgefäß entnehmbar ist, ist vorzugsweise vorgesehen, dass das Adapterelement unmittelbar mit dem Werkzeughalter, insbesondere formschlüssig, koppelbar ist. Wenn vorgesehen ist, dass das Werkzeug in dem Zubereitungsgefäß nicht entnehmbar ist, ist vorzugsweise vorgesehen, dass das Adapterelement formschlüssig mit dem Werkzeug zusammenwirkt, so dass die Rotation von dem Werkzeug auf das Adapterelement übertragbar ist.

Die Abtriebsschnittstelle ist dazu ausgebildet, um formschlüssig, insbesondere zum Übertragen eines Drehmoments, mit der Antriebsschnittstelle gekoppelt zu werden. Beispielsweise ist dazu an der Abtriebsschnittstelle, insbesondere einer Welle der Abtriebsschnittstelle, ein Außenvierkant und an der Antriebsschnittstelle des Entsaftermoduls ein Innenvierkant ausgebildet. Die Getriebeeinheit wird folglich in der Kette der rotierenden Bauteile zwischen Werkzeug bzw. Werkzeughalter und Entsafterwerkzeug angeordnet.

Vorzugsweise ist vorgesehen, dass die Koppelstelle zwischen Antriebsschnittstelle und Abtriebsschnittstelle der Getriebeeinheit zumindest teilweise in der zentralen Durchführung im Tresterbehälter angeordnet ist. Dadurch kann eine sehr kompakte Anordnung im Zubereitungsgefäß gewährleistet werden.

Eine weitere Ausgestaltung des Entsaftermoduls sieht vor, dass die Getriebeeinheit mindestens ein Gehäuse und mindestens zwei Zahnräder aufweist. Die Zahnräder sind in dem Gehäuse angeordnet und jeweils mit dem Adapterelement bzw. der Abtriebsschnittstelle gekoppelt. Das Größenverhältnis der Zahnräder ist so gewählt, dass eine hohe Drehzahl am Adapterelement auf eine geringere Drehzahl an der Abtriebsschnittstelle umgesetzt wird.

Als besonders vorteilhaft hat sich herausgestellt, wenn mindestens ein Zahnrad als Sonnenrad und mindestens drei Zahnräder als Planetenräder ausgebildet sind. Insgesamt weist das Getriebe vorteilhaft also mindestens vier Zahnräder auf. Die Planetenräder weisen einen größeren Durchmesser als das Sonnenrad auf. Das Adapterelement weist vorzugsweise eine Antriebswelle auf, an der das Sonnenrad drehfest befestigt ist, so dass das Sonnenrad mit der Drehzahl des Werkzeughalters bzw. des Werkzeugs des Zubereitungsgefäßes rotierbar ist. Das Sonnenrad ist zentral zwischen den drei Planetenrädern angeordnet und treibt diese an. Die Planetenräder laufen in einem Hohlrad. Die Planetenräder sind über Dorne mit einem oberen Planetenträger und einem unteren Planetenträger verbunden. Die Verbindung wird vorzugsweise durch Sicherungsringe fixiert. Der obere Planetenträger ist mit der Abtriebsschnittstelle gekoppelt. Das Adapterelement und die Abtriebsschnittstelle sind vorzugsweise durch Gleitlager im Gehäuse gelagert. Vorzugsweise ist ein Radialwellendichtring am oberen Ende der Abtriebswelle vorgesehen, um das Eintreten von heruntertropfendem Saft in das Gehäuse der Getriebeeinheit zu verhindern. Vorzugsweise ist die Getriebeeinheit derart ausgebildet, dass sie ein Drehmoment von etwa 2 Nm bei etwa 1100 Umdrehungen pro Minute in etwa 18 Nm bei 122 Umdrehungen pro Minute wandelt.

Die eingangs genannte Aufgabe ist ferner gelöst durch ein Küchengerät, insbesondere zur Zubereitung von Speisen, wie in den Ausführungsbeispielen beschrieben. Das Küchengerät weist mindestens eine Küchengerätebasis mit mindestens einer Steuereinrichtung, mindestens einem Motor, insbesondere zum Antrieb eines Werkzeugs in einem Zubereitungsgefäß, und mindestens ein Zubereitungsgefäß sowie mindestens ein Entsaftermodul nach einem der beschriebenen Ausführungsbeispiele auf. Das Zubereitungsgefäß kann vorteilhaft in bzw. an der Küchengerätebasis angeordnet werden.

Gemäß einer ersten Ausgestaltung des Küchengerätes ist vorgesehen, dass das Küchengerät mindestens zwei Haltewalzen aufweist. Die Haltewalzen sind zwischen einer Öffnungsposition und einer Verriegelungsposition bewegbar. An dem Deckel des Entsaftermoduls sind mindestens zwei Deckelhalter derart anordenbar, dass im Verriegelungszustand jeder Deckelhalter mit jeweils einer der Haltewalzen zusammenwirkt. Werden die Haltewalzen von ihrer Öffnungsposition in ihre Verriegelungsposition bewegt, kommen diese automatisch in Kontakt mit dem jeweiligen Deckelhalter, wobei der Deckelhalter einen Widerstand für die Haltewalzen bildet.

Vorzugsweise ist die Steuereinrichtung des Küchengerätes derart eingerichtet und ausgebildet, dass eine Fehlermeldung an einen Benutzer, beispielsweise an einer Anzeigeeinrichtung, ausgegeben wird, wenn mit den Haltewalzen in der Verriegelungsposition ein Nichtvorhandensein der Deckelhalter erkannt wird. Das erfolgt insbesondere dann, wenn die Haltewalzen beim Verschwenken in die Verriegelungsposition in der Verriegelungsposition keinen ausreichenden mechanischen Widerstand haben. Eine Anzeigeeinrichtung ist beispielsweise ein Display an dem Küchengerät oder ein mobiles Datenverarbeitungsgerät eines Benutzers, beispielsweise ein Smartphone oder ein Tabletcomputer.

Eine weitere Ausgestaltung des Küchengerätes sieht vor, dass die Steuereinrichtung dazu eingerichtet und ausgebildet ist, auf Basis von Rezeptdaten einem Benutzer Einstellparameter in Bezug auf das Entsafterwerkzeug, insbesondere in Bezug auf die Siebeinheit und/oder die Tresteröffnung, insbesondere eine Stellung des Tresteröffnungsschiebers, anzuzeigen. Bisher ist es nicht bekannt, ein rezeptgesteuertes Entsaften von Lebensmitteln durchzuführen. Es ist auch vorgesehen, dass dem Benutzer Einstellparameter in Bezug auf die zu wählende Motorleistungsstufe auf Basis von Rezeptdaten angezeigt werden.

Die Rezeptdaten sind beispielsweise auf einem von dem Küchengerät auslesbaren Datenspeicher gespeichert und/oder können von dem Küchengerät über eine Datenschnittstelle erhalten bzw. abgerufen werden, beispielsweise über eine lokale Datenverbindung von einem mobilen Endgerät eines Benutzers, z. B. einem Smartphone, oder z. B. über das Internet von einem Server abgerufen werden.

Dem Benutzer werden beispielsweise Einstellparameter in Bezug auf die Siebeinheit, beispielsweise die Ausrichtung des ersten Siebes relativ zum zweiten Sieb angezeigt, um den Siebgrad einzustellen. Zudem ist vorgesehen, dem Benutzer eine für das spezielle Lebensmittel vorgegebene Öffnungsstellung einer Tresteröffnung anzuzeigen.

Das Küchengerät ist beispielsweise mit einem Zubereitungsprogramm zur Zubereitung einer Speise anhand eines festgelegten Rezeptes auf Basis von Rezeptdaten steuerbar. Das Küchengerät informiert den Benutzer dabei über die nächsten durchzuführenden Schritte für die Zubereitung. Im vorliegenden Fall könnte der Benutzer dazu aufgefordert werden, das Entsaftermodul mit einem bestimmten Entsafterwerkzeug einzusetzen. Erkennt das Küchengerät das Einsetzen oder wird das Einsetzen vom Benutzer bestätigt, erfolgt ein Antreiben des Motors mit einer vorbestimmten Drehzahl, die von den Steueranweisungen des Zubereitungsprogramms in Abhängigkeit von dem Rezept festgelegt ist.

Es ist ferner vorgesehen, einen Tresteröffnungsschieber, mit dem ein Öffnungsgrad der Tresteröffnung einstellbar ist, mit einem Aktuator zu versehen, so dass die Größe der Tresteröffnung von der Steuereinrichtung auf Basis von Rezeptdaten regulierbar ist.

Eine weitere Ausgestaltung des Küchengerätes sieht vor, dass die Steuereinrichtung dazu eingerichtet und ausgebildet ist, einem Benutzer aktualisierte Einstellparameter für das Entsafterwerkzeug, insbesondere zur Siebeinheit und/oder zu einer Tresteröffnung, an einer Anzeigeeinrichtung anzuzeigen, wenn eine Blockade der Rotation des Entsafterwerkzeugs durch ein zu entsaftendes Lebensmittel, insbesondere anhand einer Überwachung des Motorstroms, erkannt wird. Dem Benutzer wird beispielsweise angezeigt, die Tresteröffnung zu vergrößern oder größere Durchlassöffnungen bei der Siebeinheit zu wählen, indem das erste Sieb und das zweite Sieb in eine andere Ausrichtung zueinander gebracht werden.

Des Weiteren ist gemäß einer weiteren Ausgestaltung des Küchengerätes vorgesehen, dass die Steuereinrichtung dazu eingerichtet und ausgebildet ist, den Motor des Küchengerätes unter Verwendung von Rezeptdaten für einen Entsaftungsvorgang mit einer vorbestimmten Motorleistung, also in einer vorbestimmten Motorleistungsstufe, zu betreiben. Rezeptdaten beinhalten beispielsweise Steueranweisungen für die Steuereinrichtung, um den Motor oder andere Komponenten mit definierten Parametern zu betreiben.

Insbesondere ist die Steuereinrichtung dazu eingerichtet und ausgebildet, die Motorleistung zu steigern, wenn eine Blockierung der Rotation des Entsafterwerkzeugs, beispielsweise anhand einer Überwachung des Motorstroms, erkannt wird. Erkennt die Steuereinrichtung beispielsweise, dass der Motorstrom über einen längeren Zeitpunkt auf einem sehr hohen Niveau ist, was auf einen hohen Widerstand/Druck im Entsafterwerkzeug schließen lässt, ist vorgesehen, die Motorleistung automatisch zu steigern.

Die Erfindung betrifft ferner ein Zubereitungsgefäß für ein Küchengerät, mit mindestens einem rotierbaren Werkzeughalter und einem zumindest teilweise in das Zubereitungsgefäß einbringbaren Entsaftermodul gemäß einem der beschriebenen Ausführungsbeispiele.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Entsaftermoduls in zumindest teilweise geschnittener Seitenansicht,
- Fig. 2: ein weiteres Ausführungsbeispiel eines Entsaftermoduls in zumindest teilweise geschnittener Seitenansicht,
- Fig. 3a bis 3d: ein Ausführungsbeispiel einer Siebeinheit,
- Fig. 4: eine perspektivische Ansicht eines Entsaftermoduls,
- Fig. 5a: ein Ausführungsbeispiel einer Getriebeeinheit von außen,
- Fig. 5b: eine Explosionsansicht der Getriebeeinheit gemäß Fig. 5a, und
- Fig. 6: eine schematische Darstellung der Steuerabläufe der Steuereinrichtung eines Küchengeräts.

In den verschiedenen Figuren der Zeichnung sind gleiche Teile stets mit denselben Bezugszeichen versehen.

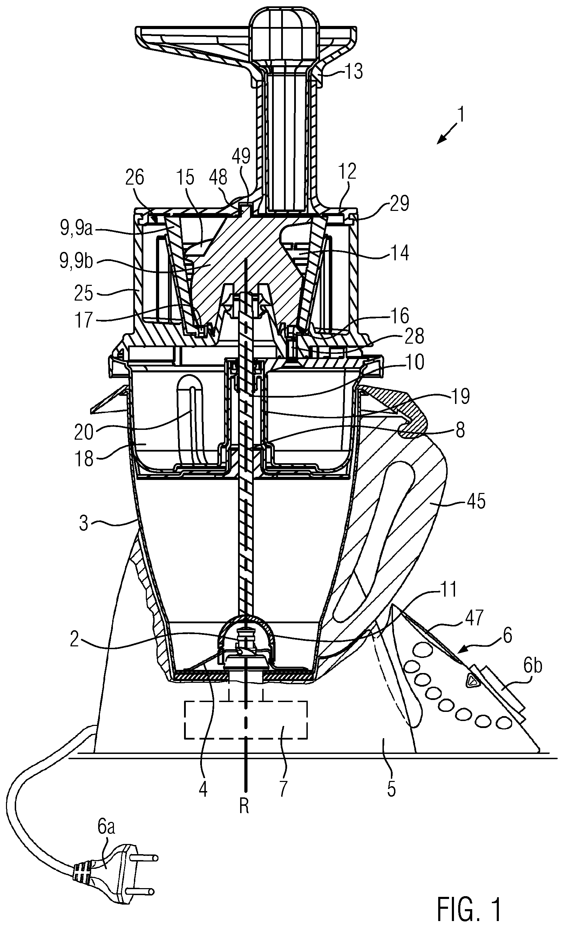

Fig. 1 zeigt ein Ausführungsbeispiel eines Entsaftermoduls 1 zum Zusammenwirken mit einem Zubereitungsgefäß 3, das zumindest einen rotierbaren Werkzeughalter 2 aufweist. Das Zubereitungsgefäß 3 weist bei diesem Ausführungsbeispiel ein fest an den Werkzeughalter 2 montiertes Werkzeug 4 in Form eines Rühr- und Schneidmessers auf. Das Zubereitungsgefäß 3 ist zumindest teilweise in eine Küchengerätebasis 5 eines Küchengerätes 6 einbringbar. Das Küchengerät 6 weist einen Motor 7 auf, um den Werkzeughalter 2 und damit das Werkzeug 4 im mit der Küchengerätebasis 5 gekoppelten Zustand rotierend anzutreiben. Zur Spannungsversorgung weist das Küchengerät 6 einen Anschlussstecker 6a auf. Das Küchengerät 6 kann beispielsweise über ein Eingabemittel 6b, hier in Form eines Drück- und Drehknopfes, gesteuert werden.

Das Entsaftermodul 1 weist mindestens eine Antriebsschnittstelle 8 und mindestens ein Entsafterwerkzeug 9 auf. Das Entsafterwerkzeug 9 ist mit der Antriebsschnittstelle 8 derart verbunden, dass mit einer Rotation der Antriebsschnittstelle 8 eine Rotation zumindest eines Teils des Entsafterwerkzeugs 9 bewirkbar ist. Die Antriebsschnittstelle 8 weist bei diesem Ausführungsbeispiel eine Antriebswelle 10 und einen Werkzeugadapter 11 auf. Die Antriebswelle 10 der Antriebsschnittstelle 8 ist im Gehäuse 25 drehbar gelagert und formschlüssig mit dem Entsafterwerkzeug 9 verbunden. Der Werkzeugadapter 11 ist ebenfalls mit der Antriebswelle 10 verbunden und wirkt formschlüssig mit dem Werkzeug 4 zusammen, so dass eine Rotation des Werkzeugs 4 eine Rotation des Entsafterwerkzeugs 9 bewirkt.

Das Entsafterwerkzeug 9 weist einen Führungskörper 9b und mindestens eine Siebeinheit 9a auf. Wird die Antriebsschnittstelle 8 von dem Werkzeug 4 bzw. dem Werkzeughalter 2 rotiert, rotiert der Führungskörper 9b um eine Rotationsachse R, während die Siebeinheit 9a nicht rotiert. Durch die dadurch verursachte Relativbewegung zwischen Führungskörper 9b und Siebeinheit 9a ist eine Presskraft auf ein zu entsaftendes Lebensmittel bewirkbar. Das Lebensmittel wird dazu durch einen mit dem Deckel 12 verbundenen Einfülltrichter 13 in einen Spalt 14 zwischen Siebeinheit 9a und Führungskörper 9b eingebracht. Der Führungskörper 9b weist eine außenliegende Förderkontur 15 auf und ist als Pressschnecke ausgebildet. Die Förderkontur 15 ist helixförmig ausgebildet und erstreckt sich mit nach unten abnehmender Gewindesteigung gewindeartig um den Führungskörper 9b.

Die Siebeinheit 9a weist im Querschnitt die Form eines Kegelstumpfes auf. Durch die Rotation des Führungskörpers 9b wird ein zu entsaftendes Lebensmittel von der Förderkontur 15 in den sich verjüngenden Spalt 14 zwischen Führungskörper 9b und Siebeinheit 9a gefördert und durch den dort wirkenden Pressdruck vom Saft befreit.

Der Führungskörper 9b weist eine im Wesentlichen konvex geformte Außenkontur auf, deren Durchmesser gemäß dem in Fig. 1 dargestellten Montagezustand vom oberen Bereich nach unten zunimmt. Der maximale Durchmesser wird etwa auf Höhe des unteren Drittels der Höhe erreicht. Unterhalb des maximalen Durchmessers nimmt der Durchmesser des Führungskörpers 9b wieder ab, um Pressrückstände ausfördern zu können. An der unteren Stirnseite 16 des Führungskörpers 9b sind dazu Fördervorsprünge 17 ausgebildet, mit denen die Pressrückstände in einen unterhalb angeordneten Tresterbehälter 18 gefördert werden können.

Der Tresterbehälter 18 ist zumindest teilweise in das Zubereitungsgefäß 3 eingebracht. Der Tresterbehälter 18 weist eine zentrale Durchführung 19 zum Durchführen der Antriebswelle 10 auf. Der Tresterbehälter 18 weist zudem auf seinem Außenumfang Rücksprünge 20 auf, die mit - nicht dargestellten - Vorsprüngen an einer Innenwand des Zubereitungsgefäßes 3 zusammenwirken, um eine Rotation des Tresterbehälters 18 im Betrieb zu verhindern.

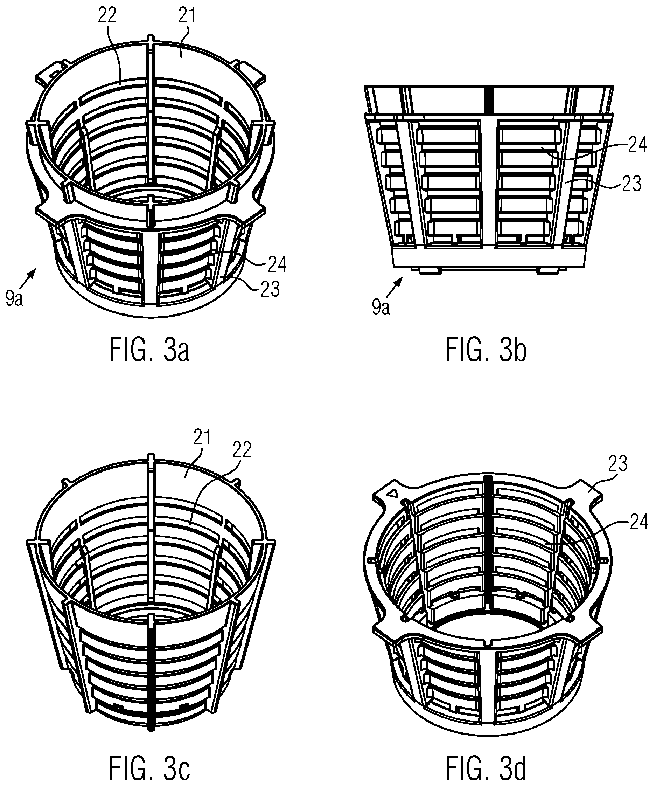

Die Siebeinheit 9a ist beispielsweise in den Figuren 3a bis 3d im Detail dargestellt. Gemäß Fig. 1 und Fig. 3a bis 3d weist die Siebeinheit 9a ein erstes Sieb 21 mit ersten Sieböffnungen 22 und ein zweites Sieb 23 mit zweiten Sieböffnungen 24 auf. Das erste Sieb 21 und das zweite Sieb 23 sind konisch in Form eines Kegelstumpfes ausgebildet, wobei sich die Durchmesser der Siebe 21, 23 zum Siebboden hin verjüngen. Das erste Sieb 21 ist in dem zweiten Sieb 23 anordenbar. Die Sieböffnungen 22, 24 sind derart ausgebildet, dass durch eine Relativbewegung des ersten Siebes 21 relativ zum zweiten Sieb 23 - insbesondere eine Rotation - die Überdeckung der ersten Sieböffnungen 22 und der zweiten Sieböffnungen 24 in mindestens zwei Ausrichtungen zueinander einstellbar ist. Die ersten Sieböffnungen 22 und die zweiten Sieböffnungen 24 sind als im Wesentlichen horizontal angeordnete Siebschlitze ausgebildet. Durch eine Veränderung der Ausrichtung des ersten Siebes 21 zum zweiten Sieb 23 kann die Überdeckung der ersten Sieböffnungen 22 und der zweiten Sieböffnungen 24 und damit die Größe der resultierenden Siebdurchlässe - der Siebgrad - eingestellt werden. In Abhängigkeit von dem zu entsaftenden Lebensmittel kann das Sieb folglich feiner oder gröber eingestellt werden, ohne dass weitere Bauteile erforderlich sind.

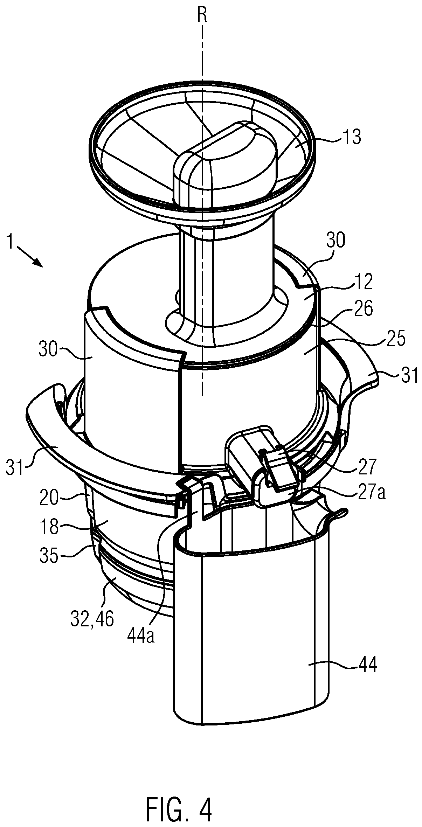

Fig. 4 zeigt ein weiteres Ausführungsbeispiel eines Entsaftermoduls 1 in einer perspektivischen Außenansicht. Das Entsafterwerkzeug 9 ist in einem Gehäuse 25 angeordnet. Das Gehäuse 25 weist mindestens eine Deckelöffnung 26 auf, die mit dem Deckel 12 verschließbar ist. Das Gehäuse 25 weist im unteren Bereich einen sich seitlich aus dem Gehäuse 25 erstreckenden Saftauslass 27 auf. Der Saftauslass 27 verfügt über eine Saftklappe 27a. Die Saftklappe 27a weist eine nicht dargestellte Dichtung auf und dient zum Verschließen des Saftauslasses 27. An der Unterseite des Gehäuses 25 ist eine zumindest teilweise in Fig. 1 sichtbare Tresteröffnung 28 vorgesehen, durch die die Pressrückstände in den Tresterbehälter 18 gefördert werden können. Um eine Kraftübertragung parallel zur Rotationsachse R zwischen Deckel 12 und Gehäuse 25 zu ermöglichen, ist zwischen Deckel 12 und Gehäuse 25 ein Bajonettverschluss 29 ausgebildet.

Gemäß Fig. 4 sind an gegenüberliegenden Seiten des Gehäuses 25 Deckelhalterungen 30 angeordnet, die nur dann montierbar sind, wenn der Deckel 12 ordnungsgemäß auf dem Gehäuse 25 aufgesetzt und insbesondere der Bajonettverschluss 29 (siehe Fig. 1) verriegelt ist. Die Deckelhalterungen 30 stützen sich im Montagezustand auf einer Oberseite des Deckels 12 und zumindest teilweise an einem Rand des Tresterbehälters 18 ab. Die Deckelhalterungen 30 sind gegenüberliegend zueinander am Gehäuse 25 angeordnet und erstrecken sich in Höhenrichtung zumindest teilweise parallel zum Gehäuse 25. Die Deckelhalterungen 30 sind zum Zusammenwirken mit Haltewalzen - nicht dargestellt - eines Küchengerätes 6 ausgebildet, um mittels der Haltewalzen ein Vorhandensein der Deckelhalterungen 30 und damit ein ordnungsgemäßes Verschließen des Gehäuses 25 zu erkennen.

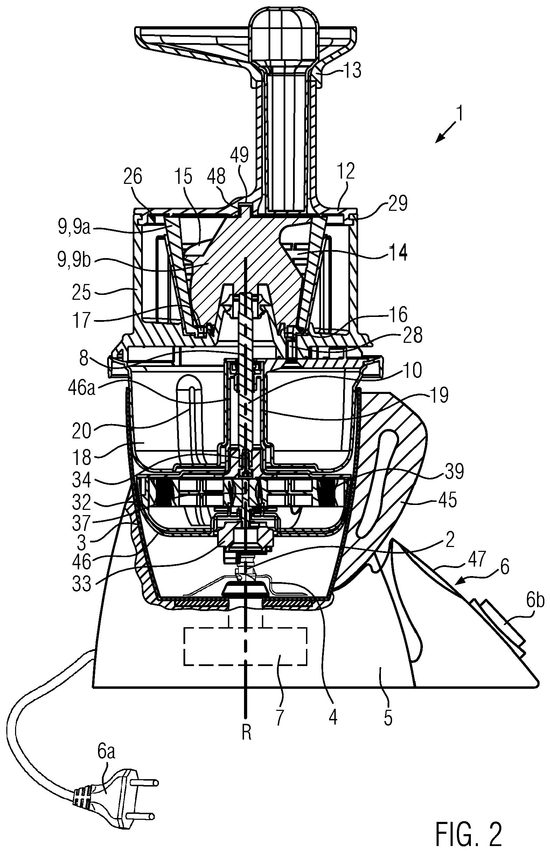

Fig. 2 zeigt ein weiteres Ausführungsbeispiel eines Entsaftermoduls 1, das im Wesentlichen gemäß dem Ausführungsbeispiel der Fig. 1 ausgebildet ist. Die übereinstimmenden Bauteile sind mit gleichen Bezugszeichen gekennzeichnet. Zur Spannungsversorgung weist das Küchengerät 6 einen Anschlussstecker 6a auf. Das Küchengerät 6 kann beispielsweise über ein Eingabemittel 6b, hier in Form eines Drück- und Drehknopfes, gesteuert werden.

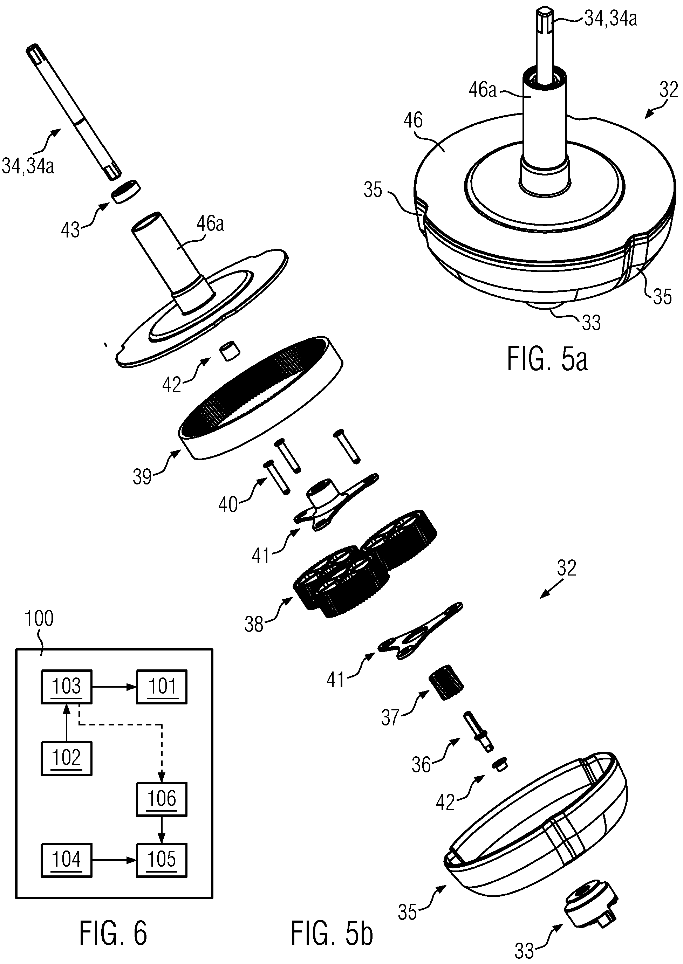

Bei dem Ausführungsbeispiel der Fig. 2 ist unterhalb des Tresterbehälters 18 im Zubereitungsgefäß 3 eine Getriebeeinheit 32 angeordnet, die in den Fig. 5a und Fig. 5b nochmals separat dargestellt ist. Die Getriebeeinheit 32 weist mindestens ein Adapterelement 33 zum formschlüssigen Zusammenwirken mit dem Werkzeughalter 2 bzw. dem Werkzeug 4 des Zubereitungsgefäßes 3 auf. Mittels des Adapterelementes 33 wird die Rotation des Werkzeughalters 2 bzw. des Werkzeugs 4 in die Getriebeeinheit 32 übertragen. Die Getriebeeinheit 32 weist ferner eine Abtriebsschnittstelle 34 auf, die mit der Antriebsschnittstelle 8 des Entsaftermoduls 1 an der Antriebswelle 10 gekoppelt ist. Dazu weist die Antriebsschnittstelle 8 an der Antriebswelle 10 beispielsweise einen Innenvierkant und die Abtriebsschnittstelle 34 einen Außenvierkant auf.

Die Getriebeeinheit 32 ist dazu ausgebildet, eine hohe Drehzahl am Adapterelement 33 auf eine geringe Drehzahl an der Abtriebsschnittstelle 34 umzusetzen. Die Getriebeeinheit 32 ist vollständig in das Zubereitungsgefäß 3 einsetzbar. Um eine Rotation der Getriebeeinheit 32 im Zubereitungsgefäß 3 zu verhindern, weist die Getriebeeinheit 32 in einem Außenumfang Ausnehmungen 35 auf, die mit zugehörigen Vorsprüngen - nicht dargestellt - an der Innenfläche des Zubereitungsgefäßes 3 formschlüssig zusammenwirken. In Fig. 5a ist der Außenvierkant an der Abtriebsschnittstelle 34 dargestellt.

Eine durch den Motor 7 des Küchengeräts 6 bewirkte Rotation des Werkzeugs 4 wird auf eine erste Welle 36 des Adapterelements 33 übertragen. Die erste Welle 36 ist mit einem als Sonnenrad 37 ausgebildeten Zahnrad gekoppelt. Das Sonnenrad 37 dreht sich folglich mit der gleichen Geschwindigkeit wie das Adapterelement 33. Das Sonnenrad 37 ist zentral zwischen drei als Planetenrädern 38 ausgebildeten Zahnrädern angeordnet, so dass das Sonnenrad 37 mit allen drei Planetenrädern 38 im Eingriff steht. Die Planetenräder 38 sind in einem Hohlrad 39 geführt.

Die Planetenräder 38 sind mittels Dornen 40 in einem oberen und einem unteren Planetenträger 41 rotierbar gelagert. Die Verbindung ist durch Sicherungsringe 40a gesichert. Die erste Welle 36 sowie die Abtriebsschnittstelle 34 sind über Gleitlager 42 in dem Gehäuse 46 der Getriebeeinheit 32 gelagert. Die Abtriebsschnittstelle 34 weist eine Welle 34a auf, die zumindest teilweise in einem zylindrischen Vorsprung 46a des Gehäuses 46 verläuft. Der obere, in Richtung der Abtriebsschnittstelle 34 orientierte Planetenträger 41 ist mit der Abtriebsschnittstelle 34 verbunden und treibt diese an. Ein Radialwellendichtring 43 zwischen Antriebsschnittstelle 34 und Gehäuse 46 verhindert das Eintreten von Saft in die Getriebeeinheit 32.

Die Getriebeeinheit 32 ermöglicht gemäß Fig. 2 die Rotation des Führungskörpers 9b mit einer deutlich geringeren Geschwindigkeit als der, mit der das Adapterelement 33 von dem Werkzeughalter 2 bzw. dem Werkzeug 4 mittels des Motors 7 des Küchengeräts 6 angetrieben wird. Das Entsaftermodul 1 kann dadurch auch mit Küchengeräten 6 verwendet werden, deren Motor 7 bezüglich der Drehzahl nicht oder nur in engen Grenzen einstellbar ist.

Gemäß Fig. 4 ist an der Außenseite des Zubereitungsgefäßes 3 ein Saftbehälter 44 anordenbar, der an dem Tresterbehälter 18 eingehängt ist und sich zumindest teilweise an einem Griff 45 des Zubereitungsgefäßes 3 abstützt. Der Tresterbehälter 18 weist zwei gegenüberliegend zueinander angeordnete Griffstücke 31 auf, die sich im Betriebszustand außerhalb des Zubereitungsgefäßes 3 befinden. Der Saftbehälter 44 weist einen Haltearm 44a auf, der an einem Griffstück 31 des Tresterbehälters 18 befestigbar, insbesondere einhängbar, ist. Der Saftbehälter 44 ist dadurch unterhalb des Saftauslasses 27 anordenbar, um durch Öffnen der Saftklappe 27a Saft in den Saftbehälter 44 auszulassen.

Gemäß Fig. 1 und Fig. 2 ist der Führungskörper 9b drehbar zwischen Gehäuse 25 und Deckel 12 gelagert. Zur Lagerung im Deckel 12 weist der Führungskörper einen Lagervorsprung 48 und der Deckel 12 einen Lagerrücksprung 49 auf. Zwischen Lagervorsprung 48 und Lagerrücksprung 49 ist ein Gleitlager ausgebildet.

Fig. 6 zeigt eine schematische Darstellung der Steuerabläufe eines Ausführungsbeispiels einer Steuereinrichtung 100 eines Küchengeräts 6. Die Steuereinheit 100 des Küchengeräts 6 ist dazu ausgebildet und eingerichtet, einem Benutzer aktualisierte Einstellparameter für das Entsafterwerkzeug 9 an einer Anzeigeeinrichtung 47 anzuzeigen 101, wenn eine Blockade der Rotation des Entsafterwerkzeugs 9, insbesondere anhand einer Überwachung 102 des Motorstroms, erkannt 103 wird. Die aktualisierten Einstellparameter beinhalten für einen Benutzer beispielsweise die Information, die Siebeinheit 9a und/oder eine Tresteröffnung 28 zu verstellen, beispielsweise die resultierenden Siebdurchlässe zu vergrößern oder die Tresteröffnung weiter zu öffnen.

Gemäß Fig. 6 ist die Steuereinrichtung 100 ferner derart eingerichtet und ausgebildet, den Motor 7 unter Verwendung von Rezeptdaten 104 für einen Entsaftungsvorgang mit einer vorbestimmten Motorleistung zu betreiben 105. Die Steuereinrichtung 100 ist zudem dazu eingerichtet und ausgebildet, die Motorleistung des Motors 7 zu steigern 106, wenn eine Blockade der Rotation des Entsafterwerkzeugs 9, beispielsweise des Förderkörpers 9b, insbesondere anhand einer Überwachung 102 des Motorstroms, erkannt 103 wird.

### Bezugszeichenliste

- 1: Entsaftermodul
- 2: Werkzeughalter
- 3: Zubereitungsgefäß
- 4: Werkzeug
- 5: Küchengerätebasis
- 6: Küchengerät
- 6a: Anschlussstecker
- 6b: Eingabemittel
- 7: Motor
- 8: Antriebsschnittstelle
- 9: Entsafterwerkzeug
- 9a: Siebeinheit
- 9b: Führungskörper
- 10: Antriebswelle
- 11: Werkzeugadapter
- 12: Deckel
- 13: Einfülltrichter
- 14: Spalt
- 15: Förderkontur
- 16: Stirnseite
- 17: Fördervorsprung
- 18: Tresterbehälter
- 19: Durchführung
- 20: Rücksprung
- 21: Erstes Sieb
- 22: Erste Sieböffnungen
- 23: Zweites Sieb
- 24: Zweite Sieböffnungen
- 25: Gehäuse
- 26: Deckelöffnung
- 27: Saftauslass
- 27a: Saftklappe
- 28: Tresteröffnung
- 29: Bajonettverschluss
- 30: Deckelhalterung
- 31: Griffstücke von 18
- 32: Getriebeeinheit
- 33: Adapterelement
- 34: Abtriebsschnittstelle
- 34a: Welle
- 35: Ausnehmungen
- 36: Erste Welle
- 37: Sonnenrad
- 38: Planetenräder
- 39: Hohlrad
- 40: Dorn
- 40a: Sicherungsringe
- 41: Planetenträger
- 42: Gleitlager
- 43: Radialwellendichtring
- 44: Saftbehälter
- 44a: Haltearm
- 45: Griff
- 46: Gehäuse von 32
- 46a: Zylindrischer Vorsprung von 46
- 47: Anzeigeeinrichtung
- 48: Lagervorsprung
- 49: Lagerrücksprung
- 100: Steuereinrichtung
- 101: Anzeigen
- 102: Überwachen des Motorstroms
- 103: Erkennen
- 104: Rezeptdaten
- 105: Betreiben des Motors 7 mit einer Motorleistung
- 106: Steigern der Motorleistung

- R: Rotationsachse

## Patentansprüche

1. Entsaftermodul (1) zum Zusammenwirken mit einem zumindest einen rotierbaren Werkzeughalter (2) aufweisenden Zubereitungsgefäß (3), aufweisend mindestens eine Antriebsschnittstelle (8) und mindestens ein Entsafterwerkzeug (9), wobei das Entsafterwerkzeug (9) mit der Antriebsschnittstelle (8) verbindbar ist, so dass mit einer Rotation der Antriebsschnittstelle (8) eine Rotation zumindest eines Teils des Entsafterwerkzeugs (9) bewirkbar ist, wobei das Entsafterwerkzeug (9) mindestens einen Führungskörper (9b) und mindestens eine Siebeinheit (9a) aufweist, wobei mit einer Rotation der Antriebsschnittstelle (8) eine Relativbewegung zwischen Führungskörper (9b) und Siebeinheit (9a) bewirkbar ist, und wobei das Entsaftermodul (1) zum Zusammenwirken mit einem Zubereitungsgefäß (3) ausgebildet ist, indem das Entsaftermodul (1) auf das Zubereitungsgefäß (3) aufsetzbar ist,
**dadurch gekennzeichnet, dass**
der Führungskörper (9b) und die Siebeinheit (9a) derart ausgebildet und angeordnet sind, dass mit einer Relativbewegung zwischen Führungskörper (9b) und Siebeinheit (9a) ein zu entsaftendes Lebensmittel in einen sich verjüngenden Spalt (14) zwischen dem Führungskörper (9b) und der Siebeinheit (9a) förderbar ist, um eine Presskraft auf das zu entsaftende Lebensmittel zu bewirken.

2. Entsaftermodul (1) nach Anspruch 1,
**dadurch gekennzeichnet, dass**
der Führungskörper (9b) mit der Antriebsschnittstelle (8) derart verbindbar ist, dass eine Rotation der Antriebsschnittstelle (8) eine Rotation des Führungskörpers (9b) bewirkt, insbesondere dass der Führungskörper (9b) eine im Wesentlichen konvex gewölbte Außenkontur aufweist.

3. Entsaftermodul (1) nach Anspruch 1 oder 2,
**dadurch gekennzeichnet, dass**
die Siebeinheit (9a) mindestens ein erstes Sieb (21) mit ersten Sieböffnungen (22) und mindestens ein zweites Sieb (23) mit zweiten Sieböffnungen (24) aufweist, insbesondere dass das erste Sieb (21) und das zweite Sieb (23) konisch ausgebildet sind, und dass das erste Sieb (21) in dem zweiten Sieb (23) anordenbar ist, vorzugsweise dass das erste Sieb (21) und das zweite Sieb (23) in mindestens zwei unterschiedlichen Ausrichtungen zueinander ausrichtbar sind, und dass eine Überdeckung der ersten Sieböffnungen (22) und der zweiten Sieböffnungen (24) in den beiden Ausrichtungen unterschiedlich ist.

4. Entsaftermodul (1) nach einem der Ansprüche 1 bis 3,
**dadurch gekennzeichnet, dass**
mindestens ein Gehäuse (25) vorhanden ist, dass das Gehäuse (25) mindestens eine Deckelöffnung (26), mindestens einen Saftauslass (27), mindestens eine Tresteröffnung (28) und mindestens einen Deckel (12) aufweist, und dass die Deckelöffnung (26) mit dem Deckel (12) verschließbar ist, insbesondere dass zwischen Deckel (12) und Gehäuse (25) eine in Axialrichtung einer Rotationsachse (R) des Entsafterwerkzeugs (9) formschlüssige Verbindung ausbildbar ist, beispielsweise dadurch, dass zwischen Gehäuse (25) und Deckel (12) ein Bajonettverschluss (29) ausgebildet ist.

5. Entsaftermodul (1) nach Anspruch 4,
**dadurch gekennzeichnet, dass**
der Deckel (12) über mindestens einen Einfüllstutzen mit Einfülltrichter (13) verfügt, wobei der Einfüllstutzen so platziert ist, dass zu entsaftende Lebensmittel zwischen den Führungskörper (9b) und die Siebeinheit (9a) einfüllbar sind.

6. Entsaftermodul (1) nach Anspruch 4 oder 5,
**dadurch gekennzeichnet, dass**
zwei Deckelhalterungen (30) vorhanden sind, dass der Deckel (12) zum Zusammenwirken mit den Deckelhalterungen (30) ausgebildet ist, insbesondere dass die Deckelhalterungen (30) derart ausgebildet sind, dass die Deckelhalterungen (30) am Deckel (12) nur dann montierbar sind, wenn der Deckel (12) vollständig mit dem Gehäuse (25) verriegelt ist.

7. Entsaftermodul (1) nach einem der Ansprüche 1 bis 6,
**dadurch gekennzeichnet, dass**
mindestens ein Tresterbehälter (18) vorhanden ist, insbesondere dass der Tresterbehälter (18) in seinem Außenumfang mindestens eine Ausnehmung zum Zusammenwirken mit mindestens einem Vorsprung auf einer Innenwand des Zubereitungsgefäßes (3) aufweist, vorteilhaft dass an dem Tresterbehälter (18) mindestens ein Stellelement zur Regulierung der Öffnungsweite einer Tresteröffnung (28) gelagert ist und/oder dass mindestens ein Fixiermittel vorhanden ist, und dass das Fixiermittel dazu ausgebildet ist, das Entsaftermodul (1) an einem Griff (45) eines Zubereitungsgefäßes (3), einem Tragegriff einer Küchengerätebasis (5) oder einer Kontur eines Zubereitungsgefäßes (3) zu fixieren, oder das Entsaftermodul (1) kraftschlüssig zur Verhinderung eines axialen Auswanderns gegen eine Innenfläche eines Zubereitungsgefäßes (3) zu verspannen.

8. Entsaftermodul (1) nach Anspruch 7,
**dadurch gekennzeichnet, dass**
der Tresterbehälter (18) unterhalb des Entsafterwerkzeugs (9), nämlich unterhalb des Führungskörpers (9b) und der Siebeinheit (9a), angeordnet ist.

9. Entsaftermodul (1) nach einem der Ansprüche 1 bis 8,
**dadurch gekennzeichnet, dass**
ein Saftbehälter (44) vorgesehen ist, insbesondere dass der Saftbehälter (44) an einem Tresterbehälter (18) befestigbar ist, vorteilhaft dass der Saftbehälter (44) derart ausgebildet ist, dass sich der Saftbehälter (44) im Montagezustand zumindest teilweise an einem Griff (45) des Zubereitungsgefäßes (3) abstützt.

10. Entsaftermodul (1) nach einem der Ansprüche 1 bis 9,
**dadurch gekennzeichnet, dass**
mindestens eine Getriebeeinheit (32) vorhanden ist, dass die Getriebeeinheit (32) mindestens ein Adapterelement (33) zum zumindest mittelbaren Zusammenwirken mit dem Werkzeughalter (2) des Zubereitungsgefäßes (3) und mindestens eine Abtriebsschnittstelle (34) aufweist, und dass die Getriebeeinheit (32) dazu ausgebildet ist, eine hohe Drehzahl am Adapterelement (33) auf eine geringere Drehzahl an der Abtriebsschnittstelle (34) umzusetzen, vorteilhaft dass die Getriebeeinheit (32) zumindest teilweise in das Zubereitungsgefäß (3) einbringbar ist und/oder dass die Getriebeeinheit (32) mindestens ein Gehäuse (46) und mindestens zwei Zahnräder aufweist, vorzugsweise dass mindestens ein Zahnrad als Sonnenrad (37) und mindestens drei Zahnräder als Planetenräder (38) ausgebildet sind, dass die Planetenräder (38) einen größeren Durchmesser als das Sonnenrad (37) aufweisen, und dass das Sonnenrad (37) mit dem Adapterelement (33) und die Abtriebsschnittstelle (34) mit den Planetenrädern (38) gekoppelt ist.

11. Entsaftermodul (1) nach einem der Ansprüche 1 bis 10,
**dadurch gekennzeichnet, dass**
das Entsaftermodul (1) zum formschlüssigen Zusammenwirken mit dem Zubereitungsgefäß (3) und/oder der Küchengerätebasis (5) ausgebildet ist.

12. Entsaftermodul (1) nach einem der Ansprüche 1 bis 11,
**dadurch gekennzeichnet, dass**
der Führungskörper (9b) mindestens eine Förderkontur (15), insbesondere auf seiner Außenkontur, aufweist.

13. Küchengerät (6), aufweisend mindestens eine Küchengerätebasis (5), mindestens eine Steuereinrichtung (100), mindestens einen Motor (7), mindestens ein Zubereitungsgefäß (3) und mindestens ein Entsaftermodul (1) nach einem der Ansprüche 1 bis 12, wobei das Entsaftermodul (1) zum Zusammenwirken mit dem Zubereitungsgefäß (3) ausgebildet ist, indem das Entsaftermodul (1) auf das Zubereitungsgefäß (3) aufsetzbar ist, bevorzugt dass mindestens zwei Haltewalzen vorhanden sind, wobei die Haltewalzen zumindest zwischen einer Öffnungsposition und einer Verriegelungsposition bewegbar sind, und dass an einem Deckel (12) des Entsaftermoduls (1) mindestens zwei Deckelhalterungen (30) derart anordenbar sind, dass im Verriegelungszustand jede Deckelhalterung (30) mit einer Haltewalze zusammenwirkt, insbesondere dass die Steuereinrichtung (100) zumindest zur Ausgabe einer Fehlermeldung an einer Anzeigeeinrichtung eingerichtet ist, wenn mit den Haltewalzen in der Verriegelungsposition ein Nichtvorhandensein der Deckelhalterungen (30) erkannt wird.

14. Küchengerät (6) nach Anspruch 13,
**dadurch gekennzeichnet, dass**
die Steuereinrichtung (100) dazu eingerichtet und ausgebildet ist, auf Basis von Rezeptdaten (104) einem Benutzer Einstellparameter in Bezug auf das Entsafterwerkzeug (9), insbesondere in Bezug auf die Siebeinheit (9a) und/oder eine Tresteröffnung (28), und/oder Einstellinformationen in Bezug auf eine Motorleistungsstufe des Motors (7) anzuzeigen.

15. Küchengerät (6) nach Anspruch 13 oder 14,
**dadurch gekennzeichnet, dass**
die Steuereinrichtung (100) derart ausgebildet und eingerichtet ist, einem Benutzer aktualisierte Einstellparameter für das Entsafterwerkzeug (9), insbesondere zur Siebeinheit (9a) und/oder zu einer Tresteröffnung (28), an einer Anzeigeeinrichtung (47) anzuzeigen (101), wenn eine Blockade der Rotation des Entsafterwerkzeugs (9), insbesondere anhand einer Überwachung (102) des Motorstroms, erkannt (103) wird und/oder dass die Steuereinrichtung (100) derart eingerichtet und ausgebildet ist, den Motor (7) unter Verwendung von Rezeptdaten (104) für einen Entsaftungsvorgang mit einer vorbestimmten Motorleistung zu betreiben (105), insbesondere dazu eingerichtet und ausgebildet, die Motorleistung des Motors (7) zu steigern (106), wenn eine Blockade der Rotation des Entsafterwerkzeugs (9), insbesondere anhand einer Überwachung des Motorstroms, erkannt (103) wird.

16. Zubereitungsgefäß (3) für ein Küchengerät (6), mit mindestens einem rotierbaren Werkzeughalter (2) und einem zumindest teilweise in das Zubereitungsgefäß (3) einbringbaren Entsaftermodul (1) nach einem der Ansprüche 1 bis 12.

## Claims

1. Juicer module (1) for cooperation with a preparation vessel (3) having at least one rotatable tool holder (2), comprising at least one drive interface (8) and at least one juicing tool (9), wherein the juicing tool (9) is connectable to the drive interface (8), so that with a rotation of the drive interface (8) a rotation of at least a part of the juicing tool (9) can be effected, wherein the juicing tool (9) has at least one guide body (9b) and at least one sieve unit (9a), wherein with a rotation of the drive interface (8) a relative movement between guide body (9b) and sieve unit (9a) can be effected, and wherein the juicer module (1) is designed for cooperation with a preparation vessel (3) by the juicer module (1) being placeable on the preparation vessel (3),
**characterized in that**
the guide body (9b) and the sieve unit (9a) are designed and arranged such that with a relative movement between guide body (9b) and sieve unit (9a) a food to be juiced can be conveyed into a tapering gap (14) between the guide body (9b) and the sieve unit (9a) in order to effect a pressing force on the food to be juiced.

2. Juicer module (1) according to claim 1,
**characterized in that**
the guide body (9b) is connectable to the drive interface (8) such that a rotation of the drive interface (8) effects a rotation of the guide body (9b), in particular that the guide body (9b) has a substantially convexly curved outer contour.

3. Juicer module (1) according to claim 1 or 2,
**characterized in that**
the sieve unit (9a) has at least one first sieve (21) with first sieve openings (22) and at least one second sieve (23) with second sieve openings (24), in particular that the first sieve (21) and the second sieve (23) are conically designed, and that the first sieve (21) can be arranged in the second sieve (23), preferably that the first sieve (21) and the second sieve (23) can be aligned in at least two different orientations relative to each other, and that an overlap of the first sieve openings (22) and the second sieve openings (24) is different in the two orientations.

4. Juicer module (1) according to one of claims 1 to 3,
**characterized in that**
at least one housing (25) is present, that the housing (25) has at least one lid opening (26), at least one juice outlet (27), at least one pulp opening (28) and at least one lid (12), and that the lid opening (26) can be closed with the lid (12), in particular that between lid (12) and housing (25) a form-fitting connection can be formed in the axial direction of a rotation axis (R) of the juicing tool (9), for example by a bayonet closure (29) being formed between housing (25) and lid (12).

5. Juicer module (1) according to claim 4,
**characterized in that**
the lid (12) has at least one filling nozzle with filling funnel (13), wherein the filling nozzle is placed so that foods to be juiced can be filled between the guide body (9b) and the sieve unit (9a).

6. Juicer module (1) according to claim 4 or 5,
**characterized in that**
two lid holders (30) are present, that the lid (12) is designed for cooperation with the lid holders (30), in particular that the lid holders (30) are designed such that the lid holders (30) can only be mounted on the lid (12) when the lid (12) is completely locked with the housing (25).

7. Juicer module (1) according to one of claims 1 to 6,
**characterized in that**
at least one pulp container (18) is present, in particular that the pulp container (18) has in its outer circumference at least one recess for cooperation with at least one projection on an inner wall of the preparation vessel (3), advantageously that at least one adjusting element for regulating the opening width of a pulp opening (28) is mounted on the pulp container (18) and/or that at least one fixing means is present, and that the fixing means is designed to fix the juicer module (1) to a handle (45) of a preparation vessel (3), a carrying handle of a kitchen appliance base (5) or a contour of a preparation vessel (3), or to clamp the juicer module (1) force-fittingly against an inner surface of a preparation vessel (3) to prevent axial migration.

8. Juicer module (1) according to claim 7,
**characterized in that**
the pulp container (18) is arranged below the juicing tool (9), namely below the guide body (9b) and the sieve unit (9a).

9. Juicer module (1) according to one of claims 1 to 8,
**characterized in that**
a juice container (44) is provided, in particular that the juice container (44) can be attached to a pulp container (18), advantageously that the juice container (44) is designed such that the juice container (44) is at least partially supported on a handle (45) of the preparation vessel (3) in the assembled state.

10. Juicer module (1) according to one of claims 1 to 9,
**characterized in that**
at least one gear unit (32) is present, that the gear unit (32) has at least one adapter element (33) for at least indirect cooperation with the tool holder (2) of the preparation vessel (3) and at least one output interface (34), and that the gear unit (32) is designed to convert a high speed at the adapter element (33) to a lower speed at the output interface (34), advantageously that the gear unit (32) can be at least partially introduced into the preparation vessel (3) and/or that the gear unit (32) has at least one housing (46) and at least two gears, preferably that at least one gear is designed as a sun gear (37) and at least three gears are designed as planetary gears (38), that the planetary gears (38) have a larger diameter than the sun gear (37), and that the sun gear (37) is coupled to the adapter element (33) and the output interface (34) is coupled to the planetary gears (38).

11. Juicer module (1) according to one of claims 1 to 10,
**characterized in that**
the juicer module (1) is designed for form-fitting cooperation with the preparation vessel (3) and/or the kitchen appliance base (5).

12. Juicer module (1) according to one of claims 1 to 11,
**characterized in that**
the guide body (9b) has at least one conveying contour (15), in particular on its outer contour.

13. Kitchen appliance (6), comprising at least one kitchen appliance base (5), at least one control device (100), at least one motor (7), at least one preparation vessel (3) and at least one juicer module (1) according to one of claims 1 to 12, wherein the juicer module (1) is designed for cooperation with the preparation vessel (3) by the juicer module (1) being placeable on the preparation vessel (3), preferably that at least two holding rollers are present, wherein the holding rollers are movable at least between an opening position and a locking position, and that at least two lid holders (30) can be arranged on a lid (12) of the juicer module (1) such that in the locked state each lid holder (30) cooperates with a holding roller, in particular that the control device (100) is configured at least to output an error message on a display device when the absence of the lid holders (30) is detected with the holding rollers in the locking position.

14. Kitchen appliance (6) according to claim 13,
**characterized in that**
the control device (100) is configured and designed to display to a user, based on recipe data (104), setting parameters relating to the juicing tool (9), in particular relating to the sieve unit (9a) and/or a pulp opening (28), and/or setting information relating to a motor power level of the motor (7).

15. Kitchen appliance (6) according to claim 13 or 14,
**characterized in that**
the control device (100) is designed and configured to display (101) updated setting parameters for the juicing tool (9), in particular for the sieve unit (9a) and/or for a pulp opening (28), to a user on a display device (47) when a blockage of the rotation of the juicing tool (9), in particular based on monitoring (102) of the motor current, is detected (103) and/or that the control device (100) is configured and designed to operate (105) the motor (7) using recipe data (104) for a juicing process with a predetermined motor power, in particular configured and designed to increase (106) the motor power of the motor (7) when a blockage of the rotation of the juicing tool (9), in particular based on monitoring of the motor current, is detected (103).

16. Preparation vessel (3) for a kitchen appliance (6), with at least one rotatable tool holder (2) and a juicer module (1) according to one of claims 1 to 12 that can be at least partially introduced into the preparation vessel (3).

## Revendications

1. Module extracteur de jus (1) pour coopérer avec un récipient de préparation (3) comportant au moins un porte-outil rotatif (2), comprenant au moins une interface d'entraînement (8) et au moins un outil extracteur de jus (9), l'outil extracteur de jus (9) pouvant être relié à l'interface d'entraînement (8), de sorte qu'avec une rotation de l'interface d'entraînement (8) une rotation d'au moins une partie de l'outil extracteur de jus (9) peut être effectuée, l'outil extracteur de jus (9) comprenant au moins un corps de guidage (9b) et au moins une unité de tamis (9a), un mouvement relatif entre le corps de guidage (9b) et l'unité de tamis (9a) pouvant être effectué avec une rotation de l'interface d'entraînement (8), et le module extracteur de jus (1) étant conçu pour coopérer avec un récipient de préparation (3) en ce que le module extracteur de jus (1) peut être posé sur le récipient de préparation (3),
**caractérisé en ce que**
le corps de guidage (9b) et l'unité de tamis (9a) sont conçus et agencés de telle sorte qu'avec un mouvement relatif entre le corps de guidage (9b) et l'unité de tamis (9a) un aliment à presser peut être acheminé dans un espace qui se rétrécit (14) entre le corps de guidage (9b) et l'unité de tamis (9a), afin d'exercer une force de pression sur l'aliment à presser.

2. Module extracteur de jus (1) selon la revendication 1,
**caractérisé en ce que**
le corps de guidage (9b) peut être relié à l'interface d'entraînement (8) de telle sorte qu'une rotation de l'interface d'entraînement (8) provoque une rotation du corps de guidage (9b), en particulier **en ce que** le corps de guidage (9b) présente un contour extérieur essentiellement bombé de manière convexe.

3. Module extracteur de jus (1) selon la revendication 1 ou 2,
**caractérisé en ce que**
l'unité de tamis (9a) comprend au moins un premier tamis (21) avec des premières ouvertures de tamis (22) et au moins un deuxième tamis (23) avec des deuxièmes ouvertures de tamis (24), en particulier **en ce que** le premier tamis (21) et le deuxième tamis (23) sont conçus de manière conique, et **en ce que** le premier tamis (21) peut être agencé dans le deuxième tamis (23), de préférence **en ce que** le premier tamis (21) et le deuxième tamis (23) peuvent être orientés l'un par rapport à l'autre dans au moins deux orientations différentes, et **en ce qu'**un recouvrement des premières ouvertures de tamis (22) et des deuxièmes ouvertures de tamis (24) est différent dans les deux orientations.

4. Module extracteur de jus (1) selon l'une des revendications 1 à 3,
**caractérisé en ce**
**qu'**au moins un boîtier (25) est présent, **en ce que** le boîtier (25) comprend au moins une ouverture de couvercle (26), au moins une sortie de jus (27), au moins une ouverture de pulpe (28) et au moins un couvercle (12), et **en ce que** l'ouverture de couvercle (26) peut être fermée avec le couvercle (12), en particulier **en ce qu'**entre le couvercle (12) et le boîtier (25) une liaison à forme complémentaire dans la direction axiale d'un axe de rotation (R) de l'outil extracteur de jus (9) peut être formée, par exemple **en ce qu'**entre le boîtier (25) et le couvercle (12) une fermeture à baïonnette (29) est formée.

5. Module extracteur de jus (1) selon la revendication 4,
**caractérisé en ce que**
le couvercle (12) dispose d'au moins un tube de remplissage avec entonnoir de remplissage (13), le tube de remplissage étant placé de telle sorte que les aliments à presser peuvent être introduits entre le corps de guidage (9b) et l'unité de tamis (9a).

6. Module extracteur de jus (1) selon la revendication 4 ou 5,
**caractérisé en ce que**
deux supports de couvercle (30) sont présents, **en ce que** le couvercle (12) est conçu pour coopérer avec les supports de couvercle (30), en particulier **en ce que** les supports de couvercle (30) sont conçus de telle sorte que les supports de couvercle (30) ne peuvent être montés sur le couvercle (12) que lorsque le couvercle (12) est complètement verrouillé avec le boîtier (25).

7. Module extracteur de jus (1) selon l'une des revendications 1 à 6,
**caractérisé en ce**
**qu'**au moins un récipient à pulpe (18) est présent, en particulier **en ce que** le récipient à pulpe (18) présente dans sa circonférence extérieure au moins un évidement pour coopérer avec au moins une saillie sur une paroi intérieure du récipient de préparation (3), avantageusement **en ce qu'**au moins un élément de réglage pour réguler la largeur d'ouverture d'une ouverture de pulpe (28) est monté sur le récipient à pulpe (18) et/ou **en ce qu'**au moins un moyen de fixation est présent, et **en ce que** le moyen de fixation est conçu pour fixer le module extracteur de jus (1) à une poignée (45) d'un récipient de préparation (3), une poignée de transport d'une base d'appareil de cuisine (5) ou un contour d'un récipient de préparation (3), ou pour serrer le module extracteur de jus (1) par adhérence pour empêcher une migration axiale contre une surface intérieure d'un récipient de préparation (3).

8. Module extracteur de jus (1) selon la revendication 7,
**caractérisé en ce que**
le récipient à pulpe (18) est agencé en dessous de l'outil extracteur de jus (9), à savoir en dessous du corps de guidage (9b) et de l'unité de tamis (9a).

9. Module extracteur de jus (1) selon l'une des revendications 1 à 8,
**caractérisé en ce**
**qu'**un récipient à jus (44) est prévu, en particulier **en ce que** le récipient à jus (44) peut être fixé à un récipient à pulpe (18), avantageusement **en ce que** le récipient à jus (44) est conçu de telle sorte que le récipient à jus (44) s'appuie au moins partiellement sur une poignée (45) du récipient de préparation (3) dans l'état de montage.

10. Module extracteur de jus (1) selon l'une des revendications 1 à 9,
**caractérisé en ce**
**qu'**au moins une unité d'engrenage (32) est présente, **en ce que** l'unité d'engrenage (32) comprend au moins un élément adaptateur (33) pour coopérer au moins indirectement avec le porte-outil (2) du récipient de préparation (3) et au moins une interface de sortie (34), et **en ce que** l'unité d'engrenage (32) est conçue pour convertir une vitesse de rotation élevée à l'élément adaptateur (33) en une vitesse de rotation plus faible à l'interface de sortie (34), avantageusement **en ce que** l'unité d'engrenage (32) peut être introduite au moins partiellement dans le récipient de préparation (3) et/ou **en ce que** l'unité d'engrenage (32) comprend au moins un boîtier (46) et au moins deux roues dentées, de préférence **en ce qu'**au moins une roue dentée est conçue comme roue solaire (37) et au moins trois roues dentées comme roues planétaires (38), **en ce que** les roues planétaires (38) ont un diamètre plus grand que la roue solaire (37), et **en ce que** la roue solaire (37) est couplée à l'élément adaptateur (33) et l'interface de sortie (34) aux roues planétaires (38).

11. Module extracteur de jus (1) selon l'une des revendications 1 à 10,
**caractérisé en ce que**
le module extracteur de jus (1) est conçu pour coopérer de manière complémentaire avec le récipient de préparation (3) et/ou la base d'appareil de cuisine (5).

12. Module extracteur de jus (1) selon l'une des revendications 1 à 11,
**caractérisé en ce que**
le corps de guidage (9b) présente au moins un contour de transport (15), en particulier sur son contour extérieur.

13. Appareil de cuisine (6), comprenant au moins une base d'appareil de cuisine (5), au moins un dispositif de commande (100), au moins un moteur (7), au moins un récipient de préparation (3) et au moins un module extracteur de jus (1) selon l'une des revendications 1 à 12, le module extracteur de jus (1) étant conçu pour coopérer avec le récipient de préparation (3) en ce que le module extracteur de jus (1) peut être posé sur le récipient de préparation (3), de préférence en ce qu'au moins deux rouleaux de maintien sont présents, les rouleaux de maintien étant mobiles au moins entre une position d'ouverture et une position de verrouillage, et en ce qu'au moins deux supports de couvercle (30) peuvent être agencés sur un couvercle (12) du module extracteur de jus (1) de telle sorte que dans l'état de verrouillage chaque support de couvercle (30) coopère avec un rouleau de maintien, en particulier en ce que le dispositif de commande (100) est configuré au moins pour émettre un message d'erreur sur un dispositif d'affichage lorsque l'absence des supports de couvercle (30) est détectée avec les rouleaux de maintien dans la position de verrouillage.

14. Appareil de cuisine (6) selon la revendication 13,
**caractérisé en ce que**
le dispositif de commande (100) est configuré et conçu pour afficher à un utilisateur des paramètres de réglage concernant l'outil extracteur de jus (9), en particulier concernant l'unité de tamis (9a) et/ou une ouverture de pulpe (28), et/ou des informations de réglage concernant un niveau de puissance moteur du moteur (7) sur la base de données de recette (104).

15. Appareil de cuisine (6) selon la revendication 13 ou 14,
**caractérisé en ce que**
le dispositif de commande (100) est conçu et configuré pour afficher (101) à un utilisateur des paramètres de réglage mis à jour pour l'outil extracteur de jus (9), en particulier pour l'unité de tamis (9a) et/ou pour une ouverture de pulpe (28), sur un dispositif d'affichage (47), lorsqu'un blocage de la rotation de l'outil extracteur de jus (9), en particulier basé sur une surveillance (102) du courant moteur, est détecté (103) et/ou **en ce que** le dispositif de commande (100) est configuré et conçu pour faire fonctionner (105) le moteur (7) en utilisant des données de recette (104) pour un processus d'extraction de jus avec une puissance moteur prédéterminée, en particulier configuré et conçu pour augmenter (106) la puissance moteur du moteur (7) lorsqu'un blocage de la rotation de l'outil extracteur de jus (9), en particulier basé sur une surveillance du courant moteur, est détecté (103).

16. Récipient de préparation (3) pour un appareil de cuisine (6), avec au moins un porte-outil rotatif (2) et un module extracteur de jus (1) selon l'une des revendications 1 à 12 pouvant être introduit au moins partiellement dans le récipient de préparation (3).
